# EUROPÄISCHE PATENTSCHRIFT

(11) **EP 0 537 699 B1**
(45) Veröffentlichungstag und Bekanntmachung des Hinweises auf die Patenterteilung: **12.03.1997**
(21) Anmeldenummer: 92117521.2
(22) Anmeldetag: 14.10.1992
(51) Int. Cl.: B64C 1/14

(54) **Gepäckklappe für ein Flugzeug**
Aircraft cargo door
Porte de la soute cargo d'un avion

(30) Priorität: 18.10.1991 DE 4134499; 01.10.1992 DE 4233047
(43) Veröffentlichungstag der Anmeldung: 21.04.1993
(73) Patentinhaber: Daimler-Benz Aerospace Airbus Gesellschaft mit beschränkter Haftung, 21129 Hamburg (DE)
(72) Erfinder: Klug, Heinz-Günter, Dr., W-2150 Buxtehude (DE)
(74) Vertreter: Hansmann, Dierk, Dipl.-Ing.

(56) Entgegenhaltungen:
- FR-A- 2 110 343
- US-A- 4 453 684

## Beschreibung

Die Erfindung bezieht sich auf ein Verkehrsflugzeug nach dem Oberbegriff des Patentanspruchs 1.

Die WO 89/09165 zeigt eine Beladeöffnung mit einer Gepäckklappe für ein derartiges Verkehrsflugzeug mit einem unterhalb des Kabinenfußbodens befindlichen Gepäckraum, wobei die Gepäckklappe um eine im oberen Bereich der Beladeöffnung angeordnete Achse nach innen schwenkbar ist. Dabei erstreckt sich die Beladeöffnung vom Verbindungsbereich des Fußbodens mit der Rumpfstruktur in Umfangsrichtung bis in den Bereich der Rumpfmittelebene. Die hier entnehmbaren Mittel betreffen im wesentlichen eine Sicherheitseinrichtung für ein im Bodenbereich des Gepäckraumes angeordnetes Förderband, wodurch erreicht wird, daß mittels des Förderbandes zur Beladeöffnung hin beförderte Gepäckstücke keine Beschädigungen an der Rumpfstruktur des Flugzeuges hervorrufen. Obwohl diesem Dokument ein Förderband zu entnehmen ist, das in gewissem Maße zur Erleichterung des Ein- und Ausladens von einzelnen Gepäckstücken beiträgt, ist die Zugänglichkeit des Frachtraumes infolge der nach innen geschwenkten Frachtklappe reduziert. Derartige Beladehilfen mit einem Förderband sind vorwiegend bei Flugzeugen in der Größenordnung von ca. 80 bis 150 Sitzen üblich. Dabei wird das Gepäck mittels des Förderbandes aus dem Bereich der Beladeöffnung ins Innere des Frachtraums befördert. Bei der gezeigten Lösung erstreckt sich das Förderband direkt bis unmittelbar in den Bereich der Beladeöffnung. Zum Beladen des Frachtraumes ist eine erste Person erforderlich, die die Gepäckstücke auf dem Förderband ablegt und eine zweite Person, die die Gepäckstücke anreicht. Bei anderen Lösungen dieser Art ist es notwendig, daß die erste Person im Bereich der Beladeöffnung des Frachtraumes sitzt und das ihr zugereichte Gepäck auf das Förderband gibt, wobei die Vorgänge des Entladens sinngemäß in umgekehrter Richtung ablaufen. Da die Höhe des Frachtraumes nur 0,8 bis 1,1 m beträgt, ist das Be- und Entladen des Förderbandes nur in sitzender Haltung ausführbar. Das Gewicht der Gepäckstücke kann bis zu 20 kg betragen, was unter Berücksichtigung der ungünstigen Körperhaltung bei der betreffenden Person zu einer außerordentlichen körperlichen Belastung, insbesondere der Wirbelsäule führt.

Das Patentdokument FR-A-2 110 343 zeigt ein anderes relativ großes Verkehrsflugzeug mit einem unterhalb des Kabinenbodens angeordneten Frachtraum, einer Beladeöffnung für den Frachtraum und einem Beladetor mit mindestens einem Scharnier zum Schließen der Beladeöffnung, wobei das Beladetor nach außen schwenkbar ausgebildet ist, und das Scharnier an Orten angebracht ist, die im Verbindungsbereich des Kabinenbodens mit der Rumpfstruktur bzw. etwa im Bereich der Rumpfmittelebene liegen. Dabei wird die Fracht in entsprechenden Frachtcontainern verstaut, die mittels motorisch angetriebener Einrichtungen verladen werden.

Das Beladetor für die Beladeöffnung eines Frachtraumes gemäß dem vorgenannten Dokument, das im Prinzip auch zum Schließen einer Beladeöffnung für ein Verkehrsflugzeug mit etwa 80 bis 150 Sitzen geeignet ist, wobei ein Gepäckraum unterhalb des Kabinenbodens angeordnet ist, enthält keinen Hinweis, der zur Erleichterung der manuellen Arbeiten sowie zur Reduzierung des Personalaufwandes beim Ein- und Ausladen entsprechender Gepäckstücke führen könnte.

Demgemäß liegt der Erfindung die Aufgabe zugrunde, ein Verkehrsflugzeug der eingangs genannten Art so auszubilden, daß das Be- und Entladen des Gepäckraumes mit einzelnen Gepäckstücken von nur einer Person in optimaler Körperhaltung ausgeführt werden kann.

Diese Aufgabe wird durch die im Anspruch 1 angegebenen Maßnahmen gelöst.

Dabei ist insbesondere von Vorteil, daß der zum Be- und Entladen eines in Betracht kommenden Flugzeuges erforderliche personelle Aufwand reduziert und zugleich eine humanere Gestaltung des betreffenden Arbeitsplatzes erreicht wird.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Beispielausführung mit einer nach außen öffnenden Gepäckklappe,
- Fig. 2: eine Beispielausführung mit einer faltbaren Gepäckklappe,
- Fig. 3: die Gepäckklappe nach Fig. 2 mit einer Arbeitsplattform,
- Fig. 4: eine Beispielausführung mit einer zweiteiligen Gepäckklappe,
- Fig. 5: die Gepäckklappe nach Fig. 4 in teilweise geschlossenem Zustand,
- Fig. 6: eine Gepäckklappe mit einer kleineren Beladeöffnung,
- Fig. 7: eine am oberen Rand der Beladeöffnung angelenkte faltbare Gepäckklappe und
- Fig. 8: die Gepäckklappe nach Fig. 7 in Verbindung mit einer Arbeitsplattform.

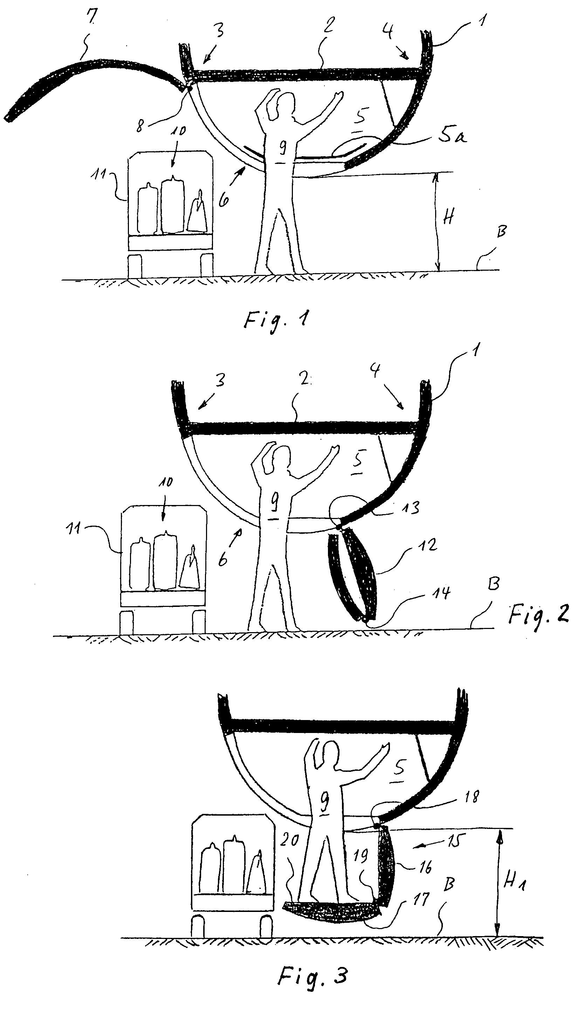

Fig. 1 zeigt einen Schnitt durch einen Flugzeugrumpf, im wesentlichen bestehend aus einer Rumpfstruktur 1 von annähernd kreisförmigem Querschnitt und einer den Kabinenboden tragenden Fußbodenstruktur 2, wobei diese in seitlichen Verbindungsbereichen 3,4 an der Rumpfstruktur 1 angeschlossen ist. Unterhalb der Fußbodenstruktur 2 befindet sich der mit Gepäckstücken beladbare Gepäckraum 5. Die Höhe H der tiefsten Stelle des Rumpfquerschnitts über dem Erdboden B beträgt das 0,4- bis 0,6-fache der Durchschnittskörpergröße einer menschlichen Person. Der im Türbereich des Gepäckraumes 5 geführte Schnitt zeigt die Beladeöffnung 6 und die Gepäckklappe 7, die mittels eines Scharniers 8 mit einer annähernd parallel zur Rumpfachse verlaufenden Schwenkachse mit der Rumpfstruktur 1 verbunden ist. Das Öffnen der Gepäckklappe 7, geschieht durch Schwenken nach außen um das Scharnier 8. Die Beladeöffnung 6 erstreckt sich annähernd von dem im Bild linken Verbindungsbereich 3 nach unten in Umfangsrichtung bis in den Bereich der Rumpfmittelebene. Durch diese Ausbildung der Beladeöffnung 6 kann eine Werkperson 9 auf dem Erdboden B aufrecht stehen, so daß sich sein Oberkörper mit hinreichender Bewegungsfreiheit für die Arme innerhalb des Laderaumes 5 befindet. Infolge der gegenüber der bekannten Gepäckklappe erweiterten Beladeöffnung 6 kann die Werkperson 9 das Gepäck 10 von einem an günstiger Stelle abgestellten Gepäckkarren 11 nehmen und in aufrechter Haltung auf ein Förderband 5a auflegen. Optimale Verhältnisse liegen vor, wenn die Rumpfkontur, wie gezeigt, etwa im Bereich der Gürtellinie der Werkperson 9 verläuft. In der gezeigten Ausgestaltung der Gepäckklappe 7 ergibt sich die günstige Relation zwischen der Rumpfkontur und der Gürtellinie der Werkperson 9 zufällig durch die Höhe H.

Fig. 2 zeigt eine andere Ausgestaltung der Erfindung, mit den Bezugszeichen 1 bis 6 und 9 bis 11, wobei die mit 12 bezeichnete Gepäckklappe faltbar ausgebildet ist. Die Gepäckklappe 12 ist an der Rumpfstruktur 1 in dem dem Verbindungsbereich 3 gegenüberliegenden Bereich der Beladeöffnung 6 mittels eines Scharnieres 13 angelenkt. Die Faltbarkeit der Gepäckklappe 12 wird durch ein Scharnier 14 mit einer zur Rumpfachse annähernd parallelen Schwenkachse erreicht. Auch hierbei erstreckt sich die Beladeöffnung 6 aus der Nähe des Verbindungsbereiches 3 bis in den Bereich der Rumpfmittelebene, so daß die hier vorliegenden Arbeitsbedingungen im Prinzip mit denen übereinstimmen, wie sie sich aus der Ausgestaltung nach Fig. 1 ergeben. Hierzu trägt bei, daß die Höhe der tiefsten Stelle des Rumpfquerschnitts über dem Erdboden B mit der Höhe H nach Fig. 1 annähernd übereinstimmt. Aufgrund der Faltbarkeit der Gepäckklappe 12 kann diese in geöffnetem Zustand nicht durch Bodenfahrzeuge beschädigt werden. Je nach den geometrischen Verhältnissen des Flugzeuges sind unterschiedliche Ausgestaltungen der Gepäckklappe 7,12 denkbar.

Figur 3 zeigt eine Ausgestaltung der Erfindung, wobei die tiefste Stelle des Rumpfquerschnitts über dem Erdboden B, verglichen mit den Beispielen nach den Figuren 1 und 2, eine größere Höhe H₁ aufweist. Die hier mit 15 bezeichnete Gepäckklappe besteht aus einem an der Rumpfstruktur 1 angelenkten Anlenkteil 16 und einem in geöffnetem Zustand freien gegenüber dem Anlenkteil 16 schwenkbaren Schließteil 17. Zur Verbindung des Anlenkteils 16 mit der Rumpfstruktur 1 ist ein Scharnier 18 vorgesehen. Die Anlenkung des Schließteils 17 erfolgt über ein Schwenkscharnier 19. Die Schwenkachsen beider Scharniere 18, 19 verlaufen annähernd parallel zur Rumpfachse. Infolge der größeren Höhe H₁ würde ein auf dem Erdboden B stehender Ladearbeiter eine ungünstige Position gegenüber dem Gepäckraum 5 einnehmen. Diesem Nachteil wird dadurch abgeholfen, daß der in geöffnetem Zustand freie Schließteil 17 eine in Beladestellung annähernd horizontal ausgerichtete Arbeitsplattform 20 aufweist. Zur Herstellung optimaler Arbeitsbedingungen ist die Arbeitsplattform 20 gegenüber der Rumpfstruktur 1 so angeordnet, daß die Rumpfkontur wieder etwa im Bereich der Gürtellinie der Werkperson 9 verläuft.

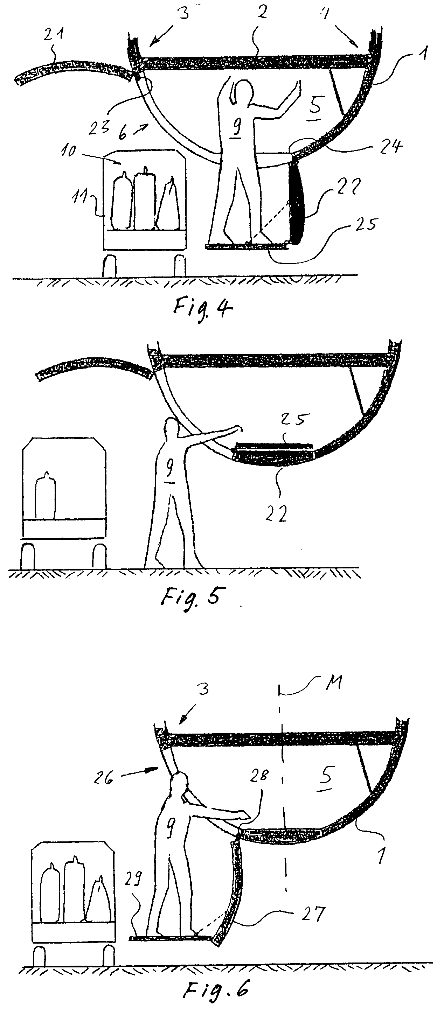

Figur 4 zeigt eine Ausgestaltung der Erfindung, wobei die Gepäckklappe zweiteilig ausgebildet ist und aus einer Oberstruktur 21 und einer Unterstruktur 22 besteht, die jeweils an der Rumpfstruktur 1 mittels eines oberen Scharniers 23 und eines unteren Scharniers 24 angelenkt sind. Dabei erstreckt sich die Beladeöffnung 6 wieder von dem im Bild linken Verbindungsbereich 3 nach unten in Umfangsrichtung bis in den Bereich der Rumpfmittelebene. Infolge einer aus der Unterstruktur 22 ausklappbaren Arbeitsplattform 25 kann die Werkperson 9 im Prinzip die Gepäckstücke 10 dem Gepäckkarren 11 unter den gleichen Arbeitsbedingungen entnehmen und im Gepäckraum 5 verstauen wie bei der Ausgestaltung nach Fig. 3. Die hier beschriebene Ausgestaltung bietet jedoch den Vorteil, daß der Gepäckraum 5 nach Schließen der Unterstruktur 22 weiter beladbar ist.

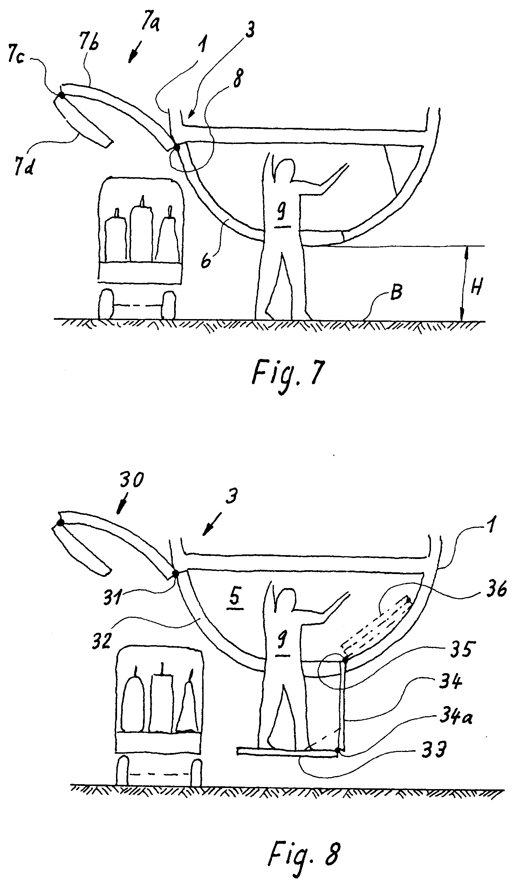

Figur 5 zeigt die Ausgestaltung nach Fig. 4 mit geschlossener Unterstruktur 22. Damit wird die Arbeitsplattform 25 zu einem Teil der Innenwand des Gepäckraumes 5. Hierdurch besteht im Türbereich eine zusätzlich beladbare Fläche des Gepäckraumes 5, so daß dieser weitere Gepäckstücke aufnehmen kann.

Figur 6 zeigt nun eine andere Ausgestaltung der Erfindung, wobei sich die feste Rumpfstruktur 1 bis über die Rumpfmittelebene M erstreckt, wodurch sich eine kleinere Beladeöffnung 26 ergibt. Dabei ist die mit 27 bezeichnete Gepäckklappe im Fußbodenbereich des Gepäckraumes 5 mittels eines Scharniers 28 an der Rumpfstruktur 1 angelenkt und in ihrem in geöffnetem Zustand freien Ende mit einer ausklappbaren Arbeitsplattform 29 versehen. Dabei ergibt sich im Prinzip die gleiche Arbeitsweise wie bei der Ausgestaltung nach Fig. 5, wobei jedoch von Vorteil ist, daß die Höhe des Rumpfes über dem Erdboden aufgrund der Arbeitsplattform 29 jetzt größer sein darf. Da die Zugänglichkeit des Gepäckraumes für die Werkperson 9 nicht in dem Maße gegeben ist wie in den Ausgestaltungen nach den Fign. 1 bis 4, ist die Anwendung einer flugzeugseitigen Ladehilfe, beispielsweise eines Förderbandes, sinnvoll. Ist der Beladevorgang beendet, wird die Arbeitsplattform 29 nach oben geklappt und in ihrer Ruheposition gesichert. Danach wird die Gepäckklappe 27 geschlossen und verriegelt. Auch bei dieser Ausgestaltung besteht im Türbereich eine zusätzlich beladbare Fläche des Gepäckraumes 5, so daß dieser weitere Gepäckstücke aufnehmen kann.

Fig. 7 zeigt einen Schnitt durch einen Flugzeugrumpf, im wesentlichen bestehend aus einer Rumpfstruktur 1 von annähernd kreisförmigem Querschnitt und einer den Kabinenboden tragenden Fußbodenstruktur 2, wobei diese seitliche Verbindungsbereiche 3,4 mit der Rumpfstruktur 1 aufweist. Unterhalb der Fußbodenstruktur 2 befindet sich der mit Gepäckstücken beladbare Gepäckraum 5. Die Höhe H der tiefsten Stelle des Rumpfquerschnitts über dem Erdboden B beträgt das 0,4- bis 0,6-fache der Durchschnittskörpergröße einer menschlichen Person. Der im Türbereich des Gepäckraumes 5 geführte Schnitt zeigt die Beladeöffnung 6 mit der faltbar ausgebildeten Gepäckklappe 7a. Diese ist über ein Scharnier 8 mit einer annähernd parallel zur Rumpfachse verlaufenden Schwenkachse mit der Rumpfstruktur 1 verbunden und besteht aus einem Anlenkteil 7b, und einem damit über ein Scharnier 7c verbundenen Schließteil 7d. Das Öffnen der Gepäckklappe 7, geschieht durch Schwenken nach außen um das Scharnier 8 und gleichzeitiges Einschwenken des Schließteils 7c zum Anlenkteil 7a hin um das Scharnier 7b. Die Beladeöffnung 6 erstreckt sich annähernd von dem im Bild linken Verbindungsbereich 3 nach unten in Umfangsrichtung bis über die Rumpfmittelebene hinaus. Durch diese Ausbildung der Beladeöffnung 6 kann eine Werkperson 9 auf dem Erdboden B aufrecht stehen, so daß sich ihr Oberkörper mit hinreichender Bewegungsfreiheit für die Arme innerhalb des Laderaumes 5 befindet. Infolge der erweiterten Beladeöffnung 6 kann der Gepäckkarren 11 an günstiger Stelle positioniert werden, so daß das Gepäck 10 von der Werkperson 9 in aufrechter Haltung auf ein Förderband 5a gelegt werden kann.

Figur 8 zeigt eine weitere erfindungsgemäße Lösung, wobei die Arbeitsgänge, wie in Verbindung mit Fig. 4 beschrieben, ablaufen. Hierbei ist die Gepäckklappe 30 wieder faltbar ausgebildet und in der Nähe des Verbindungsbereiches 3 über ein Scharnier 31 mit der Rumpfstruktur verbunden. Die Beladeöffnung 32 erstreckt sich vom Scharnier 31 bis über die Rumpfmittelebene hinaus. Eine Arbeitsplattform 33 ist über eine Trageinrichtung 34 und ein Scharnier 35 mit der Rumpfstruktur 1 verbunden. Die Arbeitsplattform 33 mit der Trageinrichtung 34 ist in Arbeitsposition dargestellt. Bei Nichtbenutzung, also unter anderem während des Fluges, ist die Arbeitsplattform 33 mit der Trageinrichtung 34 in der strich-punktiert dargestellten Stauposition 36 verriegelt. Soll der Gepäckraum 5 eines gelandeten Flugzeuges entladen werden, so wird zunächst die Gepäckklappe 30 geöffnet und in die gezeigte offene Stellung gebracht. Dann wird die Arbeitsplattform 33 durch die Beladeöffnung 32 nach unten geklappt, durch Entfalten in die gezeigte Arbeitsposition gebracht und darin verriegelt. Infolge der faltbaren Ausbildung der Gepäckklappe befindet sich diese in ihrer Beladeposition außerhalb des Einflußbereiches von Bodengeräten, so daß sie weitgehend gegen Beschädigung geschützt ist.

Zum Schließen und Verriegeln der Gepäckklappe sind alle bekannten Lösungsprinzipien anwendbar. Auch um die Gepäckklappe mehr oder weniger in den Festigkeitsverband des Rumpfes einzubeziehen, sind alle bekannten Lösungen verwendbar.

## Patentansprüche

1. Verkehrsflugzeug mit etwa 80 bis 150 Sitzen mit einem unterhalb des Kabinenbodens angeordneten Gepäckraum, einer Beladeöffnung für den Gepäckraum und einer Gepäckklappe mit mindestens einem Scharnier zum Schließen der Beladeöffnung, wobei die Gepäckklappe nach außen schwenkbar ausgebildet ist, und das Scharnier an Orten angebracht ist, die im Verbindungsbereich des Kabinenbodens mit der Rumpfstruktur bzw. etwa im Bereich der Rumpfmittelebene liegen,
**dadurch gekennzeichnet,** daß sich die Beladeöffnung (6) von dem Verbindungsbereich (3,4) unmittelbar unterhalb des Kabinenbodens beginnend, abwärts in Umfangsrichtung bis über die Rumpfmittelebene (M) hinaus erstreckt.

2. Verkehrsflugzeug nach Anspruch 1,
**dadurch gekennzeichnet,** daß
die Gepäckklappe im unteren Kantenbereich der Beladeöffnung (6) an der Rumpfstruktur angelenkt ist und die Gepäckklappe (7,7a,12, 15,30) faltbar ausgebildet ist und aus einem an der Rumpfstruktur 1 angelenkten Anlenkteil (12,16) und einem in geöffnetem Zustand gegenüber dem Anlenkteil (12,16) frei schwenkbaren Schließteil (17) besteht.

3. Verkehrsflugzeug nach Anspruch 2,
**dadurch gekennzeichnet,** daß der in geöffnetem Zustand freie Schließteil (17) der Gepäckklappe (7,7a,12, 15,30) eine in Beladestellung annähernd horizontal ausgerichtete Arbeitsplattform (20,33) aufweist.

4. Verkehrsflugzeug nach Anspruch 1,
**dadurch gekennzeichnet,** daß die Gepäckklappe aus einer oberen Teilklappe (21) und einer unteren Teilklappe (22) besteht, die jeweils an der Rumpfstruktur 1 mittels eines oberen Scharniers (23) und eines unteren Scharniers (24) angelenkt sind.

5. Verkehrsflugzeug nach Anspruch 4,
**dadurch gekennzeichnet,** daß die untere Teilklappe (22) eine in geöffnetem Zustand der Gepäckklappe ausklappbare Arbeitsplattform (25) aufweist.

6. Verkehrsflugzeug nach Anspruch 1,
**dadurch gekennzeichnet,** daß die Gepäckklappe (7,7a, 12,15,30) im oberen Kantenbereich der Beladeöffnung an der Rumpfstruktur (1) angelenkt und faltbar ausgebildet ist und aus einem an der Rumpfstruktur (1) angelenkten Anlenkteil (7b) und einem in geöffnetem Zustand gegenüber dem Anlenkteil (7b) schwenkbaren Schließteil (7d) besteht.

7. Verkehrsflugzeug nach Anspruch 6,
**dadurch gekennzeichnet,** daß eine ausklappbare Arbeitsplattform (33) über eine Trageinrichtung (34) und ein Scharnier (35) im unteren Kantenbereich der Beladeöffnung mit der Rumpfstruktur (1) verbunden ist.

## Claims

1. A commercial aircraft with about 80 to 150 seats with a hold arranged beneath the cabin floor, a loading aperture for the hold and a baggage flap with at least one hinge for closing the loading aperture, the baggage flap being designed to swing outwardly, and the hinge being attached in places located in the region joining the cabin floor to the fuselage structure and/or approximately in the region of the centre plane of the fuselage, characterised in that the loading aperture (6) extends from the joining region (3,4) starting immediately below the cabin floor and downwards in a peripheral direction to beyond the centre plane (M) of the fuselage.

2. A commercial aircraft according to claim 1, characterised in that the baggage flap is linked to the fuselage structure in the lower edge region of the loading aperture (6), and the baggage flap (7,7a,12,15,30) is designed to fold and comprises a pivoting member (12,16) hinged to the fuselage structure (1) and a closing member (17) which can swing freely relative to the linking member (12,16) in the open condition.

3. A commercial aircraft according to claim 2, characterised in that the closing member (17) of the baggage flap (7,7a,12,15,30), which is free in the open condition, has a working platform (20,33) which is aligned substantially horizontally in the loading position.

4. A commercial aircraft according to claim 1, characterised in that the baggage flap comprises an upper part-flap (21) and a lower part-flap (22) pivoted to the fuselage structure (1) by means of an upper hinge (23) and a lower hinge (24) respectively.

5. A commercial aircraft according to claim 4, characterised in that the lower part-flap (22) has a working platform (25) which can be opened out when the baggage flap is open.

6. A commercial aircraft according to claim 1, characterised in that the baggage flap (7,7a,12,15,30) is linked to the fuselage structure (1) in the upper edge region of the loading aperture, is designed to fold and comprises a pivoting member (7b) hinged to the fuselage structure (1) and a closing member (7d) arranged to swing relative to the pivoting member (7b) in the open condition.

7. A commercial aircraft according to claim 6, characterised in that a working platform (33) arranged to be opened out is joined to the fuselage structure (1) by a carrying means (34) and a hinge (35) in the lower edge region of the loading aperture.

## Revendications

1. Avion de ligne avec environ 80 à 150 sièges présentant une soute à bagages disposée en-dessous du sol de la cabine, une ouverture de chargement pour la soute à bagages et une trappe de la soute à bagages pourvue d'au moins une charnière destinée à fermer l'ouverture de chargement, dans lequel la trappe de la soute à bagages est conçue de manière à pouvoir pivoter vers l'extérieur et la charnière est placée à des endroits situés dans la zone de connexion entre le sol de la cabine et la structure de la coque respectivement environ dans la zone du plan médian de la coque,
**caractérisé en ce que** l'ouverture de chargement (6) s'étend, à partir de la zone de connexion (3, 4) directement située en-dessous du sol de la cabine, vers le bas dans la direction périphérique jusqu'au plan médian de la coque (M).

2. Avion de ligne selon la revendication 1, caractérisé en ce que la trappe de la soute à bagages est articulée dans la zone inférieure des bords de l'ouverture de chargement (6) sur la structure de la coque et en ce que la trappe de la soute à bagages (7, 7a, 12, 15, 30) est conçue de façon pliable et se compose d'une partie articulée (12, 16) articulée sur la structure de la coque 1 et une partie de fermeture (17) pouvant pivoter librement en position ouverte par rapport à la partie articulée (12, 16).

3. Avion de ligne selon la revendication 2, caractérisé en ce que la partie de fermeture (17) libre à l'état ouvert de la trappe de la soute à bagages (7, 7a, 12, 15, 30) présente une plate-forme de travail (20, 33) dirigée à peu près horizontalement en position de chargement.

4. Avion de ligne selon la revendication 1, caractérisé en ce que la trappe de la soute à bagages se compose d'une trappe partielle supérieure (21) et d'une trappe partielle inférieure (22) qui sont toutes deux articulées sur la structure de la coque 1 au moyen d'une charnière supérieure (23) et d'une charnière inférieure (24).

5. Avion de ligne selon la revendication 4, caractérisé en ce que la trappe partielle inférieure (22) présente en position ouverte de la trappe de la soute à bagages une plate-forme de travail basculante (25).

6. Avion de ligne selon la revendication 1, caractérisé en ce que la trappe de la soute à bagages (7, 7a, 12, 15, 30) est articulée sur la structure de la coque (1) dans la partie supérieure des bords de l'ouverture de chargement, est conçue de manière pliable et se compose d'une partie articulée (7b) articulée sur la structure de la coque (1) et d'une partie de fermeture (7d) pouvant pivoter en position ouverte par rapport à la partie articulée (7b).

7. Avion de ligne selon la revendication 6, caractérisé en ce que une plate-forme de travail basculante (33) est connectée par l'intermédiaire d'un dispositif de support (34) et une charnière (35) dans la zone inférieure des bords de l'ouverture de chargement à la structure de la coque (1).
